# EUROPEAN PATENT APPLICATION

(11) **EP 4 664 455 A1**
(43) Date of publication of application: **17.12.2025**
(21) Application number: 23920492.8
(22) Date of filing: 09.02.2023
(51) Int. Cl.: G10L 19/16

(54) **AUDIO SIGNAL PROCESSING METHOD, APPARATUS, DEVICE, AND STORAGE MEDIUM**

(71) Applicant: Beijing Xiaomi Mobile Software Co., Ltd., Beijing 100085 (CN)
(72) Inventor: WANG, Bin, Beijing 100085 (CN)
(74) Representative: Gunzelmann, Rainer
(86) International application number: PCT/CN2023/075303
(87) International publication number: WO 2024/164284

(57) **Abstract**

An audio signal processing method, an apparatus, a device, and a storage medium. The method comprises: determining a target encoding rate corresponding to an audio signal (201); determining a target encoding mode corresponding to the audio signal, the target encoding mode being an encoding mode selected from among a plurality of encoding modes (202), wherein the difference between different encoding modes comprises at least one of the following: different encoding computation complexity and different storage spaces required by encoding; and encoding the audio signal on the basis of the target encoding rate and the target encoding mode to obtain a code stream signal (203). The method improves the flexibility of audio signal encoding.

## Description

### TECHNICAL FIELD

The present disclosure relates to a field of audio signal technology, and specifically to an audio signal processing method, apparatus and device, and a storage medium.

### BACKGROUND

When encoding an audio signal, it is usually necessary to first determine an encoding mode corresponding to the audio signal.

### SUMMARY

The present disclosure provides an audio signal processing method, apparatus and device, and a storage medium.

In a first aspect, embodiments of the present disclosure provide an audio signal processing method, including:
determining a target encoding rate corresponding to an audio signal;
determining a target encoding mode corresponding to the audio signal, wherein the target encoding mode is selected from a plurality of encoding modes, and a difference between different encoding modes includes at least one of different encoding computation complexity, or different storage space required for encoding; and
encoding the audio signal based on the target encoding rate and the target encoding mode, to obtain a bitstream signal.

In this disclosure, the target encoding mode corresponding to the audio signal determined by the encoding device is the encoding mode selected from the plurality of encoding modes, wherein the difference between different encoding modes includes at least one of different encoding computational complexity or different storage space required for encoding. From this, it can be seen that in the method of the present disclosure, different encoding modes with different encoding computational complexity and/or required storage space can be flexibly selected for audio signals. Based on this, for the same or similar encoding rate, when the encoding device is in different scenarios (such as different network qualities of the network environment where the encoding device is located or different audio quality requirements currently required by the encoding device), different target encoding modes can be flexibly selected from the plurality of encoding modes, thus achieving the solution of "flexibly adopting different encoding modes for the same or similar encoding rate in different scenarios", which improves the flexibility of audio signal encoding.

Optionally, the target encoding mode is selected from the plurality of encoding modes based on at least one of a network quality of a network environment where the encoding device is located, a remaining electric quantity of the encoding device, a charging convenience of the encoding device, a software configuration of the encoding device, a hardware configuration of the encoding device, or a current required audio quality requirement.

Optionally, the target encoding mode is preset.

Optionally, determining the target encoding mode and the target encoding rate includes:
obtaining a control parameter, wherein the control parameter includes the target encoding mode and the target encoding rate.

Optionally, the bitstream signal includes indication information, and the indication information indicates at least one of:
the target encoding mode; or
a target decoding mode corresponding to the target encoding mode, wherein a decoding process of the target decoding mode is an inverse process of an encoding process of the target encoding mode.

Optionally, the method further includes:
sending the bitstream signaling to a decoding device.

Optionally, the audio signal includes at least one of:
a channel based audio signal;
an object based audio signal; or
a scene based audio signal.

In a second aspect, embodiments of the present disclosure provide an audio signal processing method, including:
receiving a bitstream signal sent by an encoding device, wherein the bitstream signal is a signal obtained by encoding an audio signal by the encoding device based on a target encoding rate and a target encoding mode, the target encoding mode being selected from a plurality of encoding modes, wherein a difference between different encoding modes includes at least one of different encoding computational complexity, or different storage space required for encoding; and
decoding the bitstream signal.

Optionally, the bitstream signal includes indication information, and the indication information indicates at least one of:
the target encoding mode; or
a target decoding mode corresponding to the target encoding mode, wherein a decoding process of the target decoding mode is an inverse process of an encoding process of the target encoding mode.

Optionally, decoding the bitstream signal includes:
determining the indication information based on the bitstream signal;
determining the target decoding mode corresponding to the target encoding mode based on the indication information; and
decoding the bitstream signal based on the target decoding mode.

In a third aspect, embodiments of the present disclosure provide a communication device, including:
a processing module, configured to determine a target encoding rate corresponding to an audio signal;
the processing module is further configured to determine a target encoding mode corresponding to the audio signal, wherein the target encoding mode is selected from a plurality of encoding modes, and a difference between different encoding modes includes at least one of different encoding computation complexity, or different storage space required for encoding; and
the processing module is further configured to encode the audio signal based on the target encoding rate and the target encoding mode, to obtain a bitstream signal.

In a fourth aspect, embodiments of the present disclosure provide a communication device, including:
a transceiver module, configured to receive a bitstream signal sent by an encoding device, wherein the bitstream signal is a signal obtained by encoding an audio signal by the encoding device based on a target encoding rate and a target encoding mode, the target encoding mode being selected from a plurality of encoding modes, wherein a difference between different encoding modes includes at least one of different encoding computational complexity, or different storage space required for encoding; and
a processing module, configured to decode the bitstream signal.

In a fifth aspect, embodiments of the present disclosure provide a communication device. The communication device includes a processor. When a computer program in a memory is called by the processor, the method in the first aspect or the second aspect above is implemented.

In a sixth aspect, embodiments of the present disclosure provide a communication device. The communication device includes a processor and a memory for storing a computer program. When the computer program stored in the memory is executed by the processor, the communication device is caused to implement the method in the first aspect or the second aspect above.

In a seventh aspect, embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method in the first aspect or the second aspect above.

In an eighth aspect, embodiments of the present disclosure provide a communication system. The system includes the communication device in any of the third aspect to the fourth aspect, or the system includes the communication device in the fifth aspect, or the system includes the communication device in the sixth aspect, or the system includes the communication device in the seventh aspect.

In a ninth aspect, embodiments of the present disclosure provide a computer-readable storage medium for storing instructions used by the network device above. When the instructions are executed, the terminal is caused to implement the method in the first aspect or the second aspect above.

In a tenth aspect, embodiments of the present disclosure provide a computer program product including a computer program. When the computer program is running on a computer, the computer is caused to implement the method in the first aspect or the second aspect above.

In an eleventh aspect, embodiments of the present disclosure provide a chip system. The chip system includes at least one processor and an interface for supporting the network device to implement the functions involved in the methods described in the first or second aspect, such as determining or processing at least one of the data and information involved in the above methods. In a possible design, the chip system further includes a memory for storing necessary computer programs and data of the source auxiliary nodes. This chip system can be composed of chips or include chips and other discrete components.

In a twelfth aspect, embodiments of the present disclosure provide a computer program that, when executed on a computer, causes the computer to perform the method described in the first aspect or the second aspect.

### BRIEF DESCRIPTION OF THE DRAWINGS

The above and/or additional aspects and advantages of the present disclosure will become apparent and easily understood from the following description of the embodiments in conjunction with the accompanying drawings.
FIG. 1 is a schematic diagram of an architecture of a communication system provided in an embodiment of the present disclosure.
FIG. 2 is a schematic flowchart of an audio signal processing method provided in an embodiment of the present disclosure.
FIG. 3 is a schematic flowchart of an audio signal processing method provided in an embodiment of the present disclosure.
FIG. 4 is a schematic flowchart of an audio signal processing method provided in an embodiment of the present disclosure.
FIG. 5 is a schematic flowchart of an audio signal processing method provided in an embodiment of the present disclosure.
FIG. 6 is a schematic flowchart of an audio signal processing method provided in an embodiment of the present disclosure.
FIG. 7 is a schematic flowchart of an audio signal processing method provided in an embodiment of the present disclosure.
FIG. 8 is a schematic flowchart of an audio signal processing method provided in an embodiment of the present disclosure.
FIG. 9 is a block diagram of a communication device provided in an embodiment of the present disclosure.
FIG. 10 is a block diagram of a communication device provided in an embodiment of the present disclosure.
FIG. 11 is a block diagram of a communication device provided in an embodiment of the present disclosure.
FIG. 12 is a block diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It should also be understood that the term "and/or" used in this article refers to and includes any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining...".

The embodiments of the present disclosure are described in detail below. Examples of the embodiments are shown in the accompanying drawings, in which the same or similar reference numbers throughout the present embodiment represent the same or similar elements or elements having the same or similar functions. The embodiments below with reference to the accompanying drawings are exemplary and are intended to explain the present disclosure, but should not be construed as a limitation to the present disclosure.

In the field of audio processing, the encoding mode of the audio signal is usually determined based on the encoding rate of the audio signal, where the same or similar encoding rate correspond to the fixed same encoding mode. That is to say, for the same or similar encoding rate, regardless of the scenario, a fixed encoding mode is used for encoding, such as using a fixed encoding computational complexity and/or a fixed encoding mode corresponding to the required storage space for encoding. However, the solution of "flexibly using different encoding modes for the same or similar encoding rate in different scenarios" cannot be achieved, and the flexibility is low.

Based on this, the present disclosure proposes an audio signal processing method.

Optionally, in an embodiment of the present disclosure, the term "similar encoding rates" can be understood as: encoding rates with small differences, such as encoding rates with differences less than a preset threshold. For example, if the difference between encoding rate #1 and encoding rate #2 is less than the preset threshold, then encoding rate #1 and encoding rate #2 are considered to be similar encoding rates. The preset threshold can be preset, and the value of the preset threshold should be relatively small. For example, the preset threshold can be: 2 bits, 3 bits, 4 bits, etc. It should be noted that the values of the preset threshold mentioned above are only examples, and it should be understood that other values used to explain "similar encoding rates" should also be within the scope of protection of this disclosure.

In addition, the above "similar" is only an exemplary description of the present disclosure, and other concepts with the same meaning, such as "close", "near", "approximate", etc., are also within the scope of protection of the present disclosure.

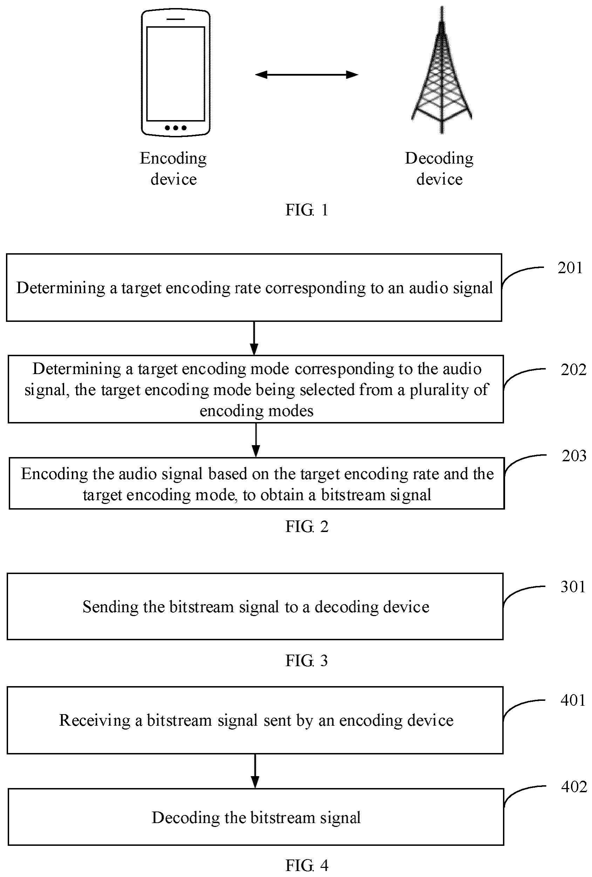

Please refer to FIG. 1, which is a schematic diagram of an architecture of a communication system provided in an embodiment of the present disclosure. The communication system may include but is not limited to an encoding device and a decoding device. The encoding device may be a terminal or a network device, and the decoding device may be a terminal or a network device. Optionally, the number and form of devices shown in FIG. 1 are used as an example and do not constitute limitations on the embodiments of the present disclosure. In practical applications, one or more encoding devices may be included, or one or more decoding devices may be included. Optionally, the communication system shown in FIG. 1 includes one signal encoding device, which is a terminal, and one decoding device, which is a network device, as an example.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The terminal in the embodiments of the present disclosure may be an entity on the user side used for receiving or transmitting signals, such as a mobile phone. The terminal can also be referred to as terminal device, user equipment (UE), mobile station (MS), mobile terminal (MT), etc. The terminal can be communication enabled car, smart car, mobile phone, wearable device, tablet, computer with wireless transmission and reception capabilities, virtual reality (VR) terminal, augmented reality (AR) terminal, wireless terminal in industrial control, wireless terminal in autonomous driving, wireless terminal in remote medical surgery, wireless terminal in smart grids, wireless terminal in transportation safety, wireless terminal in smart cities, and wireless terminal in smart home, etc. The specific technology and device form adopted by the terminal is not limited in the embodiments of the present disclosure.

The network device in embodiments of the present disclosure may be an entity on the network side used for transmitting or receiving signals. For example, the network device can be evolved NodeB (eNB), transmission reception point (TRP), next generation NodeB (gNB) in NR systems, based station in other future mobile communication systems, or access node in wireless fidelity (Wi-Fi) systems. The specific technology and device form adopted by the network device is not limited in embodiments of the present disclosure. The MN or SN provided in the embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

It can be understood that the communication system described in the embodiments of the present disclosure is for a clearer explanation of the technical solution provided in the embodiments of the present disclosure, and does not constitute a limitation on the technical solution provided in the embodiments of the present disclosure. Those skilled in the art know that with the evolution of system architecture and the emergence of new business scenarios, the technical solution provided in the embodiments of the present disclosure is also applicable to similar technical problems.

The following provides a detailed description of the audio signal processing method, apparatus and device, and storage medium provided in the embodiments of the present disclosure with reference to the accompanying drawings.

It should be noted that in this disclosure, the audio signal processing provided by any embodiment can be executed separately, any implementation in the embodiment can also be executed separately, or combined with other embodiments, or possible implementations in other embodiments can be executed together, or combined with any technical solution in related technologies.

FIG. 2 is a schematic flowchart of an audio signal processing method provided in an embodiment of the present disclosure. The method is performed by an encoding device. As shown in FIG. 2, the audio signal processing may include the following steps.

In step 201, a target encoding rate corresponding to an audio signal is determined.

Optionally, in an embodiment of the present disclosure, the target encoding rate can be determined based on a network quality of a network environment where the encoding device is located. Optionally, the target encoding rate can be positively correlated with the network quality of the network environment where the encoding device is located. For example, when the network quality of the network environment where the encoding device is located is high, a higher encoding rate can be selected to ensure the accuracy and high quality of audio transmission. When the network quality of the network environment where the encoding device is located is low, a lower encoding rate can be selected to ensure that users on a decoding device side can still obtain the desired audio signal even in weak signal conditions.

Optionally, in another embodiment of the present disclosure, the target encoding rate can be determined based on a current required audio quality requirement (also known as the audio service quality requirement of the current application scenario). Optionally, the target encoding rate can be positively correlated with the current required audio quality requirement. For example, when the current required audio quality requirement is high, a higher encoding rate can be selected. When the current required audio quality requirement is low, a lower encoding rate can be selected.

Optionally, the method for determining the target encoding rate may include: obtaining a control parameter, wherein the control parameter includes the target encoding rate. Optionally, the control parameter may be manually input and/or input by other devices.

Optionally, in an embodiment of the present disclosure, the audio signal may include at least one of:
a channel based audio signal;
an object based audio signal; or
a scene based audio signal.

Optionally, the channel based audio signal may include at least one of mono signal, stereo signal, binaural signal, 5.1 or 7.1 surround signal, or 5.1.4 or 7.1.4 surround signal, where. 4 represents height channel signal; the scene based audio signal may include at least one of first-order high fidelity surround sound (FOA), second-order high fidelity surround sound (HOA2), and third-order high fidelity surround sound (HOA3); the object based audio signal may include audio data and/or metadata.

Optionally, when the audio signal includes at least two of the above signals, the audio signal is considered as a mixed format audio signal. For example, the mixed format audio signal may be a mixed format audio signal based on a combination of the channel based audio signal and the object based audio signal, a mixed format audio signal based on a combination of the channel based audio signal and the object based audio signal, etc.

Optionally, when the audio signal is a mixed format audio signal, the audio signal that needs to be mixed can be selected from the above three kinds of signals based on a preset selection condition. For example, the channel based audio signal and the object based audio signal can be mixed based on the selection condition.

In step 202, a target encoding mode corresponding to the audio signal is determined, wherein the target encoding mode is selected from a plurality of encoding modes.

Optionally, in an embodiment of the present disclosure, the target encoding rate may correspond to the target encoding mode. Optionally, in some embodiments, when the target encoding rate corresponds to the target encoding mode, the target encoding mode corresponding to the target encoding rate can be used for encoding at that target encoding rate.

Optionally, in an embodiment of the present disclosure, a difference between different encoding modes may include at least one of:
different encoding computation complexity; or
different storage space required for encoding.

Optionally, in an embodiment of the present disclosure, the encoding computational complexity mentioned above can be reflected as the number of encoding functional modules used by the encoding device during encoding.

Optionally, in an embodiment of the present disclosure, the difference between different encoding modes may further include: different power consumption for encoding.

Optionally, in an embodiment of the present disclosure, the target encoding mode may be preset. For example, in an embodiment of the present disclosure, the target encoding mode may be selected from a plurality of encoding modes first (such as manually selecting the target encoding mode from the plurality of encoding modes, and/or the encoding device autonomously selecting the target encoding mode from the plurality of encoding modes), and then the target encoding mode can be preset in the encoding device (such as manually presetting the target encoding mode in the encoding device, and/or the encoding device autonomously presetting the target encoding mode).

Optionally, in another embodiment of the present disclosure, the target encoding mode may be determined by the encoding device based on information input to the encoding device, wherein the information input to the encoding device may be manually input and/or input by other devices, and the information input to the encoding device may be, for example, a control parameter that includes the target encoding mode. The target encoding mode included in the information input to the encoding device may be a manually selected encoding mode from the plurality of encoding modes, and/or an encoding mode selected by other devices from the plurality of encoding modes.

Optionally, in yet another embodiment of the present disclosure, the target encoding mode may be directly selected by the encoding device from the plurality of encoding modes preconfigured in the encoding device.

Optionally, in an embodiment of the present disclosure, the target encoding mode may be selected from the plurality of encoding modes based on at least one of following factors:
a network quality of a network environment where the encoding device is located;
a remaining electric quantity of the encoding device;
a charging convenience of the encoding device;
a software configuration of the encoding device;
a hardware configuration of the encoding device; or
a current required audio quality requirement.

Optionally, in an embodiment of the present disclosure, the encoding computational complexity and required storage space of the target encoding mode may be positively correlated with the remaining electric quantity of the encoding device. For example, regarding the "remaining electric quantity of the encoding device" mentioned above, when the remaining electric quantity of the encoding device is high, the selected target encoding mode can be an encoding mode with high computational complexity and/or a large storage space required for encoding; when the remaining electric quantity of the encoding device is low, the selected target encoding mode can be an encoding mode with lower encoding computational complexity and/or a small storage space required for encoding. Optionally, in an embodiment of the present disclosure, when the target encoding mode is manually selected from the plurality of encoding modes, the remaining electric quantity of the encoding device can be manually viewed, and the target encoding mode can be selected based on the viewed remaining electric quantity; when the target encoding mode is selected by other devices and/or the encoding device from the plurality of encoding modes, the other devices and/or the encoding device can obtain the remaining electric quantity of the encoding device and select the target encoding mode based on the obtained remaining electric quantity.

Optionally, in an embodiment of the present disclosure, the encoding computational complexity and required storage space of the target encoding mode may be positively correlated with the charging convenience of the encoding device. For example, regarding the "charging convenience of the encoding device" mentioned above, when the charging convenience of the encoding device is: relatively convenient, the selected target encoding mode can be an encoding mode with high encoding computational complexity and/or a large storage space required for encoding; when the charging convenience of the encoding device is: inconvenient, the selected target encoding mode can be an encoding mode with lower computational complexity and/or a smaller storage space required for encoding. Optionally, in an embodiment of the present disclosure, when the target encoding mode is manually selected from the plurality of encoding modes, the charging convenience of the encoding device can be manually determined, and the target encoding mode can be selected based on the determined charging convenience of the encoding device; when the target encoding mode is selected by other devices and/or the encoding device from the plurality of encoding modes, the other devices and/or the encoding device can obtain the location of the encoding device and determine the charging convenience of the encoding device based on its location. Specifically, if the encoding device is located in a residential area, the charging convenience of the encoding device is determined as: relatively convenient. If the encoding device is not located in a residential area, rechargeable devices (such as shared power banks) near the encoding device are obtained based on its location. If there are rechargeable devices around the encoding device and the distance is close, the charging convenience of the encoding device is determined as: relatively convenient; otherwise, the charging convenience of the encoding device is: inconvenient.

Optionally, in an embodiment of the present disclosure, the encoding computational complexity and required storage space of the target encoding mode may be positively correlated with the software configuration of the encoding device. For example, regarding the software configuration of the encoding device mentioned above, when the software configuration of the encoding device is high, the selected target encoding mode can be an encoding mode with high encoding computational complexity and/or a large storage space required for encoding; when the software configuration of the encoding device is low, the selected target encoding mode can be an encoding mode with lower encoding computational complexity and/or a smaller storage space required for encoding. Optionally, in an embodiment of the present disclosure, when the target encoding mode is manually selected from the plurality of encoding modes, the software configuration of the encoding device can be manually viewed, and the target encoding mode can be selected based on the viewing result; when the target encoding mode is selected by other devices and/or the encoding device from the plurality of encoding modes, the other devices and/or the encoding device can obtain the software configuration of the encoding device and select the target encoding mode based on the obtained result.

Optionally, in an embodiment of the present disclosure, the encoding computational complexity and required storage space of the target encoding mode may be positively correlated with the hardware configuration of the encoding device. For example, regarding the hardware configuration of the encoding device mentioned above, when the hardware configuration of the encoding device is high (such as a central processing unit (CPU) with high computing speed), the selected target encoding mode can be an encoding mode with high computational complexity and/or a large storage space required for encoding; when the hardware configuration of the encoding device is low, the selected target encoding mode can be an encoding mode with lower encoding computational complexity and/or a smaller storage space required for encoding. Optionally, in an embodiment of the present disclosure, when the target encoding mode is manually selected from the plurality of encoding modes, the hardware configuration of the encoding device can be manually viewed, and the target encoding mode can be selected based on the viewing result; when the target encoding mode is selected by other devices and/or the encoding device from the plurality of encoding modes, the other devices and/or the encoding device can obtain the hardware configuration of the encoding device and select the target encoding mode based on the obtained result.

Optionally, in an embodiment of the present disclosure, the encoding computational complexity and required storage space of the target encoding mode may be positively correlated with the current required audio quality requirement. For example, regarding the "current required audio quality requirement" mentioned above, when the current required audio quality requirement is high (such as high richness of sound field in the scene where the encoding device is currently located), the selected target encoding mode can be an encoding mode with high computational complexity and/or a large storage space required for encoding; when the current required audio quality requirement is low (such as low richness of sound field in the scene where the encoding device is currently located), the selected target encoding mode can be an encoding mode with lower encoding computational complexity and/or a smaller storage space required for encoding. The "richness of sound field in the scene where the encoding device is currently located" can be understood as the number of speakers in the scene where the encoding device is located. Specifically, when the number of speakers in the scene where the encoding device is currently located is high, it is considered that the richness of the sound field in the scene where the encoding device is currently located is high. When the number of speakers in the scene where the encoding device is currently located is low, it is considered that the richness of the sound field in the scene where the encoding device is currently located is low. Optionally, in an embodiment of the present disclosure, when the target encoding mode is manually selected from the plurality of encoding modes, the richness of the sound field in the scene where the encoding device is currently located can be perceived manually, and the target encoding mode can be selected based on the perception result; when the target encoding mode is selected by other devices and/or the encoding device from the plurality of encoding modes, the other devices and/or the encoding device can detect the richness of the sound field in the scene where the encoding device is currently located and select the target encoding mode based on the detection result.

Optionally, in an embodiment of the present disclosure, regarding the "network quality of the network environment where the encoding device is located" mentioned above, when the network quality of the network environment where the encoding device is located is high, the selected target encoding mode may be an encoding mode with high computational complexity and/or a large storage space required for encoding. When the network quality of the network environment where the encoding device is located is poor, the selected target encoding mode can be an encoding mode with lower encoding computational complexity and/or a smaller storage space required for encoding.

It should be noted that in an embodiment of the present disclosure, regarding the "network quality of the network environment where the encoding device is located", when the network quality of the network environment where the encoding device is located is high, but there is at least one of the following situations: the remaining power of the encoding device is low, the charging convenience of the encoding device is low, the software configuration of the encoding device is low, the hardware configuration of the encoding device is low, and the current required audio quality requirement is low, then the selected target encoding mode can be an encoding mode with lower encoding computational complexity and/or a smaller storage space required for encoding; when the network quality of the network environment where the encoding device is located is low, but there is at least one of the following situations: the remaining power of the encoding device is high, the charging convenience of the encoding device is high, the software configuration of the encoding device is high, the hardware configuration of the encoding device is high, and the current required audio quality requirement is high, then the selected target encoding mode can be an encoding mode with high encoding computational complexity and/or a large storage space required for encoding.

For example, in an embodiment of the present disclosure, when the network quality of the network environment where the encoding device is located is high, a higher encoding rate is usually selected to ensure the accuracy and high quality of audio transmission. However, if the remaining power of the encoding device is low, the charging convenience of the encoding device is low, the software configuration of the encoding device is low, the hardware configuration of the encoding device is low, or the current required audio quality requirement is low, an encoding mode with lower encoding computational complexity and/or smaller storage space required for encoding can be selected to avoid the situation where "the encoding device cannot support the execution of the encoding mode with higher encoding computational complexity and/or larger storage space required for encoding due to the lower electric quantity of the encoding device or lower software and hardware configuration of the encoding device", or the situation where "due to the current low audio quality requirement, complex encoding is not necessary, but the encoding mode with high encoding computational complexity and/or large storage space required for encoding is selected, resulting in resource waste". This not only ensures the accuracy and high quality of audio transmission, but also avoids situations where the electric quantity or software/hardware configuration of the encoding device does not support the encoding mode, while also avoiding resource waste.

In another embodiment of the present disclosure, when the network quality of the network environment where the encoding device is located is low, a lower encoding rate is usually selected to ensure that users on the decoding device side can still obtain the desired audio signal even in weak signal conditions. However, if the remaining electric quantity of the encoding device is high, the charging convenience of the encoding device is high, the software configuration of the encoding device is high, the hardware configuration of the encoding device is high, or the current required audio quality requirement is high at this time, it indicates that the current electric quantity and/or software and hardware configuration of the encoding device supports the encoding mode with high encoding computational complexity and/or large storage space required for encoding, or indicates that the current required audio quality requires the encoding mode with high encoding computational complexity and/or large storage space required for encoding, then the encoding mode with high encoding computational complexity and/or large storage space required for encoding can be selected to improve encoding quality and efficiency and ensure the accuracy and high quality of audio processing.

Based on the above content, it can be seen that in an embodiment of the present disclosure, when the target encoding rate is determined for an audio signal, the target encoding mode used at the target encoding rate is selected from multiple encoding modes. That is to say, the target encoding mode used for the target encoding rate has multiple possibilities, which may be any one of the multiple encoding modes, rather than a fixed corresponding encoding mode. Therefore, the disclosed method can flexibly configure the encoding mode for encoding rates. For the same or similar encoding rate, when the encoding device is in different scenarios (such as different network quality in the network environment where the encoding device is located or different audio quality requirements for the encoding device), different target encoding modes can be flexibly selected from the multiple encoding modes. For example, for encoding rate #1, the first encoding mode can be selected in scenario #1, and the second encoding mode can be selected in scenario #2. Thus, the scheme of "flexibly adopting different encoding modes for the same or similar encoding rate in different scenarios" is achieved, which improves the flexibility of audio signal encoding.

In step 203, the audio signal is encoded based on the target encoding rate and the target encoding mode, to obtain a bitstream signal.

Optionally, in an embodiment of the present disclosure, the bitstream signal may include indication information. Optionally, the indication information may indicate at least one of:
the target encoding mode; or
a target decoding mode corresponding to the target encoding mode, wherein a decoding process of the target decoding mode is an inverse process of an encoding process of the target encoding mode.

Optionally, in an embodiment of the present disclosure, a difference between different decoding modes includes at least one of different decoding computational complexity or different storage space required for decoding.

Optionally, in an embodiment of the present disclosure, the decoding computational complexity mentioned above can be reflected in the number of decoding functional modules used by the decoding device during decoding.

Optionally, in an embodiment of the present disclosure, the difference between different decoding modes may further include different amount of electricity consumed for decoding.

Optionally, in an embodiment of the present disclosure, by carrying the indication information in the bitstream signal, after the encoding device sends the bitstream signal to the decoding device, the decoding device can determine the target decoding mode corresponding to the target encoding mode based on the indication information in the bitstream signal, and successfully decode using the target decoding mode.

In summary, in the audio signal processing method provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

FIG. 3 is a schematic flowchart of an audio signal processing method provided in an embodiment of the present disclosure. The method is performed by the encoding device. As shown in FIG. 3, the audio signal processing may include the following step.

In step 301, the bitstream signal is sent to the decoding device.

In summary, in the audio signal processing method provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

FIG. 4 is a schematic flowchart of an audio signal processing method provided in an embodiment of the present disclosure. The method is performed by a decoding device. As shown in FIG. 4, the audio signal processing may include the following steps.

In step 401, a bitstream signal sent by an encoding device is received.

Optionally, the bitstream signal is a signal obtained by encoding an audio signal by the encoding device based on a target encoding mode, the target encoding mode being selected from a plurality of encoding modes, wherein a difference between different encoding modes includes at least one of different encoding computational complexity, or different storage space required for encoding.

In step 402, the bitstream signal is decoded.

Optionally, in an embodiment of the present disclosure, the decoded audio signal may include at least one of:
a channel based audio signal;
an object based audio signal; or
a scene based audio signal.

For a detailed description of steps 401-402, please refer to the previous embodiments.

In summary, in the audio signal processing method provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

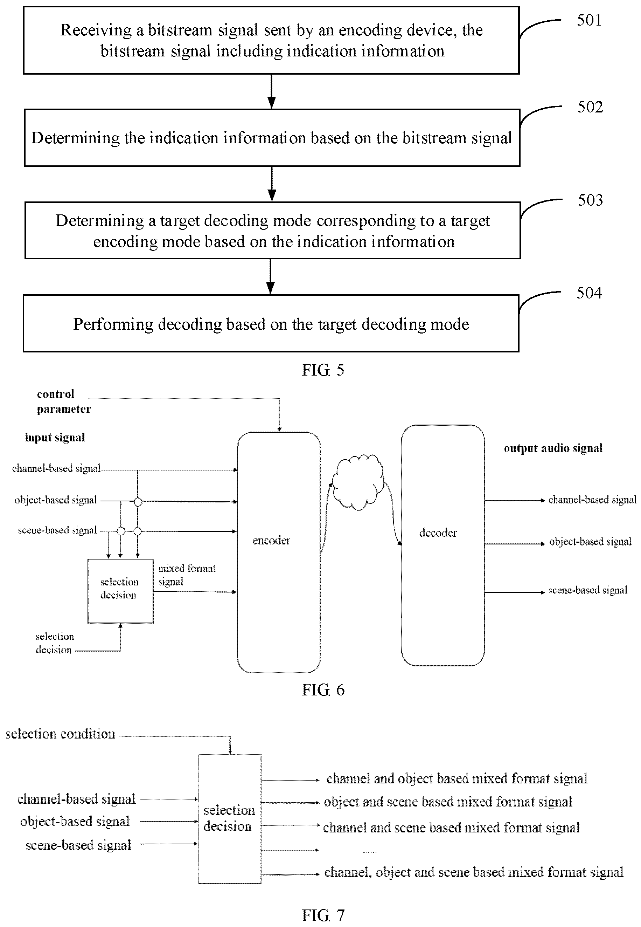

FIG. 5 is a schematic flowchart of an audio signal processing method provided in an embodiment of the present disclosure. The method is performed by a decoding device. As shown in FIG. 5, the audio signal processing may include the following steps.

In step 501, a bitstream signal sent by an encoding device is received, wherein the bitstream signal contains indication information.

Optionally, the indication information indicates at least one of:
the target encoding mode; or
a target decoding mode corresponding to the target encoding mode, wherein a decoding process of the target decoding mode is an inverse process of an encoding process of the target encoding mode.

In step 502, the indication information is determined based on the bitstream signal.

In step 503, the target decoding mode corresponding to the target encoding mode is determined based on the indication information.

In step 504, decoding is performed based on the target decoding mode.

Optionally, in an embodiment of the present disclosure, a portion of the bitstream signal can be decoded based on the target decoding mode. The portion of the bitstream signal may include, for example, a signal used for reconstructing the encoded audio signal.

For a detailed description of steps 501-504, please refer to the previous embodiments.

In summary, in the audio signal processing method provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

The following is an example introduction to the disclosed method.

The present disclosure is implemented by analyzing the principle structure of existing codecs, and aims to solve the problem of codecs not being able to flexibly configure codec levels based on factors such as the encoding rate, the encoding quality performance, the computational complexity, and the storage space. This problem leads to the inability to intelligently select suitable codecs for various application scenarios when designing end-to-end audio solutions based on the characteristics of the application scenario, the hardware and software performance of terminals, and the quality of network conditions.

The purpose of this disclosure is to design and complete codecs with multiple levels of encoding and decoding, in order to build the most suitable end-to-end audio solution based on the software and hardware requirements of all devices on the end-to-end chain, network conditions, etc., and provide users with the highest quality audio service experience possible.

Optionally, the input audio signal of the encoder in this disclosure includes audio signals in all three audio formats, namely: channel based audio signal, object based audio signal, scene based audio signal, and mixed format audio signal formed by any combination of three formats of audio signal, such as mixed format audio signal combined by channel based audio signal and object based audio signal, mixed format audio signal combined by channel based audio signal and object based audio signal. The output signal of the decoder is channel based audio signal, object based audio signal, and scene based audio signal. FIG. 6 is a flowchart of audio signal processing provided in another embodiment of the present disclosure.

The mixed format audio signal is a mixed format audio signal composed of multiple audio format signals selected from channel based audio signal, object based audio signal, and scene based audio signal according to selection criteria. This disclosure includes but is not limited to channel based audio signal, object based audio signal, and scene based audio signal. Specific audio format signal examples are as follows: monaural audio signal, stereo audio signal, 5.1 and 7.1 multi-channel audio signal, 5.1.4 and 7.1.4 three-dimensional sound audio signal, binaural audio signal, object audio signal containing metadata, spatial audio signal based on auxiliary metadata, and any other audio format signal that can characterize the sound field. FIG. 7 is a flowchart of audio signal processing provided in another embodiment of the present disclosure.

The encoder selects the appropriate encoding level for the input audio signal based on the control parameter (i.e. the encoding mode mentioned above). The encoding level of the encoder can be designed as 3 levels, namely: the first encoding level being the low-level encoding level, the second encoding level being the intermediate-level encoding level, and the third encoding level being the high-level encoding level. The decoder corresponds to this and includes 3 decoding levels, namely: the first decoding level being the low-level decoding level, the second decoding level being the intermediate-level decoding level, and the third decoding level being the high-level decoding level.

The encoding and decoding processing flow is as follows: the input audio signal is encoded using the selected encoding level in the encoder to output a bitstream signal, and the bitstream signal is sent to the decoder. The decoder automatically selects the decoding level corresponding to the encoding level for decoding processing to obtain the output audio signal.

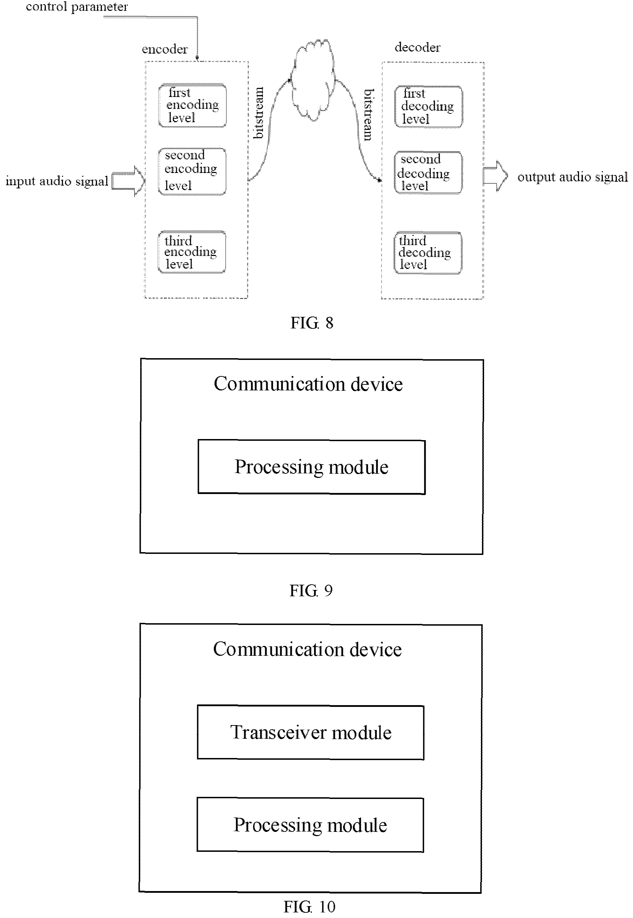

FIG. 8 is a schematic flowchart of audio signal processing provided in yet another embodiment of the present disclosure.

### Embodiment 1:

The codec has multiple levels of encoding and decoding to choose from, and the design principles for the levels of encoding and decoding are as follows.

At a higher encoding rate, lower computational complexity and smaller storage space can be used in exchange for acceptable higher quality encoding and decoding performance.

At a lower encoding rate, higher computational complexity and larger storage space can be used in exchange for acceptable higher quality encoding and decoding performance.

This embodiment is aimed at selecting the appropriate encoding level based on the user's requirement for the network environment where the terminal is located, battery level, and audio service quality of the application scenario, using control parameter settings. In this embodiment, 3 encoding levels are designed, as follows:
first encoding level: the low complexity encoding level and low power consumption encoding level
second encoding level: the intermediate complexity encoding level and medium power consumption encoding level
third encoding level: the high complexity encoding level and high power consumption encoding level.

For example, the application scenario in which the first encoding level is selected is:
the network environment is relatively good;
the remaining electric quantity of the terminal is relatively low, or although there is a lot of remaining electric quantity, charging is inconvenient;
the terminal is a low-end device with poor software and hardware configuration;
the current application scenario does not have particularly high requirements for audio service quality.

The logic for selecting the first encoding level at this time is: in a better network environment, a higher encoding rate can be selected to meet the requirement for audio service quality; when the terminal is a low-end device and has less remaining electric quantity, it requires low complexity and low storage space requirements.

For example, the application scenario in which the third encoding level is selected is:
the network environment is relatively poor;
the remaining electric quantity of the terminal is relatively high, or although there is less remaining electric quantity, charging is convenient;
the terminal is a high-end device with better software and hardware configuration;
the current application scenario has particularly high requirements for audio service quality.

The logic for selecting the third encoding level at this time is: in a poor network environment, a lower encoding rate needs to be selected to ensure that the receiving end user can still receive the audio services needed by the receiving end even in weak signal conditions; when the terminal is a high-end device and has more remaining electric quantity, it can support high complexity and high storage space requirements.

### Embodiment 2:

The codec has multiple levels of encoding and decoding available for setting and selecting. In this embodiment, the principle for setting the levels of encoding and decoding of the codec is: under the same encoding rate:
the first level of encoding and decoding contains the least number of encoding and decoding function modules, has the lowest computational complexity, requires the least storage space, and has the worst encoding performance quality;
the second level of encoding and decoding contains the moderate number of encoding and decoding function modules, has the moderate computational complexity, requires the moderate storage space, and has the moderate encoding performance quality;
the third level of encoding and decoding has the most number of encoding and decoding function modules, has the highest computational complexity, requires the most storage space, and has the best encoding performance quality.

The application scenario of this embodiment is:
When the terminal is more high-end, the network conditions are better, and the required audio service experience is higher, the higher the level of encoding and decoding used, for example, the third level of encoding and decoding can be selected.

When the terminal is more low-end, the network conditions are worse, and the required audio service experience is lower, the lower the level of encoding and decoding used, for example, the first level of encoding and decoding can be selected.

Optionally, in an audio signal encoding and decoding method, the encoder has multiple encoding levels to choose from, and the selection of encoding level can be achieved by the control parameter. The decoder has corresponding decoding levels to choose from, and the selection of decoding level is obtained by extracting from the bitstream information.

One encoding level design method can be:
the encoding levels of the encoder can be designed as multiple levels, for example, 3 levels,
first encoding level: the low complexity encoding level and the low power consumption encoding level
second encoding level: the intermediate complexity encoding level and the medium power consumption encoding level
third encoding level: the high complexity encoding level and the high power consumption encoding level.

The decoder corresponds to the encoder, and also has multiple levels. The encoder's 3-level design corresponds to the decoder's 3-level design, that is:
first decoding level: the low complexity decoding level and the low power consumption decoding level
second decoding level: the intermediate complexity decoding level and the intermediate power consumption decoding level
third decoding level: the high complexity decoding level and the high power consumption decoding level.

FIG. 9 is a block diagram of a communication device provided in an embodiment of the present disclosure. As shown in FIG. 9, the device may include a processing module.

The processing module is configured to determine a target encoding rate corresponding to an audio signal.

The processing module is further configured to determine a target encoding mode corresponding to the audio signal, wherein the target encoding mode is selected from a plurality of encoding modes, and a difference between different encoding modes includes at least one of different encoding computation complexity, or different storage space required for encoding.

The processing module is further configured to encode the audio signal based on the target encoding rate and the target encoding mode, to obtain a bitstream signal.

In summary, in the communication device provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

Optionally, in an embodiment of the prent disclosure, the target encoding mode is selected from the plurality of encoding modes based on at least one of a network quality of a network environment where the encoding device is located, a remaining electric quantity of the encoding device, a charging convenience of the encoding device, a software configuration of the encoding device, a hardware configuration of the encoding device, or a current required audio quality requirement.

Optionally, in an embodiment of the present disclosure, the target encoding mode is preset.

Optionally, in an embodiment of the present disclosure, the processing module is further configured to:
obtain a control parameter, wherein the control parameter includes the target encoding mode and the target encoding rate.

Optionally, in an embodiment of the present disclosure, the bitstream signal includes indication information, and the indication information indicates at least one of:
the target encoding mode; or
a target decoding mode corresponding to the target encoding mode, wherein a decoding process of the target decoding mode is an inverse process of an encoding process of the target encoding mode.

Optionally, in an embodiment of the present disclosure, the device is further configured to:
send the bitstream signaling to a decoding device.

Optionally, in an embodiment of the present disclosure, the audio signal includes at least one of:
a channel based audio signal;
an object based audio signal; or
a scene based audio signal.

FIG. 10 is a block diagram of a communication device provided in an embodiment of the present disclosure. As shown in FIG. 10, the device may include a transceiver module and a processing module.

The transceiver module is configured to receive a bitstream signal sent by an encoding device, wherein the bitstream signal is a signal obtained by encoding an audio signal by the encoding device based on a target encoding rate and a target encoding mode, the target encoding mode being selected from a plurality of encoding modes, wherein a difference between different encoding modes includes at least one of different encoding computational complexity, or different storage space required for encoding.

The processing module is configured to decode the bitstream signal.

In summary, in the communication device provided in embodiments of the present disclosure, the target encoding mode corresponding to the audio signal determined by the encoding device is the encoding mode selected from the plurality of encoding modes. The difference between different encoding modes includes at least one of: different encoding computational complexity or different storage space required for encoding. From this, it can be seen that in the disclosed method, different encoding modes with different encoding computational complexity and/or storage space required for encoding can be flexibly selected for audio signals. Based on this, for the same or similar encoding rate, when the encoding device is in different scenarios (such as different network quality in the network environment where the encoding device is located or different audio quality requirement currently required by the encoding device), different target encoding modes can be flexibly selected from the multiple encoding modes, thus achieving the solution of "flexibly adopting different encoding modes for the same or similar encoding rate in different scenarios", which improves the flexibility of audio signal encoding.

Optionally, in an embodiment of the present disclosure, the bitstream signal includes indication information, and the indication information indicates at least one of:
the target encoding mode; or
a target decoding mode corresponding to the target encoding mode, wherein a decoding process of the target decoding mode is an inverse process of an encoding process of the target encoding mode.

Optionally, in an embodiment of the present disclosure, the processing module is further configured to:
determine the indication information based on the bitstream signal;
determine the target decoding mode corresponding to the target encoding mode based on the indication information; and
decode the bitstream signal based on the target decoding mode.

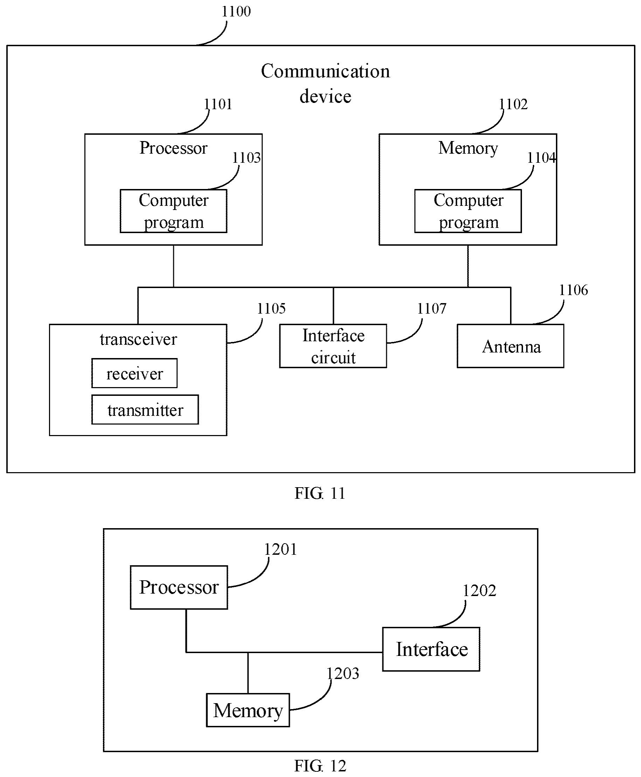

Please refer to FIG. 11, which is a block diagram of a communication device 1100 provided in an embodiment of the present disclosure. The communication device 1100 may be a network device or a terminal, or may be a chip, a chip system, or a processor that supports the network device to implement the above method, or may be a chip, a chip system, or a processor that supports the terminal to implement the above method. This communication device may be used to implement the method in the above method embodiments, and specific details may be found in explanations of the above method embodiments.

The communication device 1100 may include one or more processors 1101. The processor 1101 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 1100 may also include one or more memories 1102 on which a computer program 1104 is stored. When the computer program 1104 is executed by the memory 1102, the communication device 1100 implements the method in the above method embodiments. Optionally, the memory 1102, may also store data. The communication device 1100 and the memory 1102 may be set separately or integrated together.

Optionally, the communication device 1100 may also include a transceiver 1105 and an antenna 1106. The transceiver 1105 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 1100 includes one or more interface circuits 1106. The interface circuit 1106 is configured to receive code instructions and transmit the code instructions to the processor 1101. When the code instructions are running on the processor 1101, the communication device 1100 is caused to implement the method in the above method embodiments.

In an implementation, the processor 1101 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 1101 may store a computer program 1103. When the computer program 1103 is running on the processor 1101, the communication device 1100 is caused to implement the method in the above method embodiments. The computer program 1103 may be solidified in the processor 1101. In this way, the processor 1101 may be implemented in hardware.

In an implementation, the communication device 1100 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal, but the scope of the communication device in the present disclosure is not limited to this, and the structure of the communication device may not be restricted by FIG. 11. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case where the communication device may be a chip or a chip system, please refer to FIG. 12, which is a block diagram of a chip. The chip shown in FIG. 12 includes a processor 1201 and an interface 1202. Optionally, there may be one or more processors 1201, and there may be one or more interfaces 1202.

Optionally, the chip further includes a memory 1203 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure further provides a computer-readable storage medium for storing instructions. When the instructions are executed by a computer, functions of any one of the above method embodiments are performed.

The present disclosure further provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. An audio signal processing method, performed by an encoding device, comprising:
determining a target encoding rate corresponding to an audio signal;
determining a target encoding mode corresponding to the audio signal, wherein the target encoding mode is selected from a plurality of encoding modes, and a difference between different encoding modes comprises at least one of different encoding computation complexity, or different storage space required for encoding; and
encoding the audio signal based on the target encoding rate and the target encoding mode, to obtain a bitstream signal.

2. The method of claim 1, wherein the target encoding mode is selected from the plurality of encoding modes based on at least one of a network quality of a network environment where the encoding device is located, a remaining electric quantity of the encoding device, a charging convenience of the encoding device, a software configuration of the encoding device, a hardware configuration of the encoding device, or a current required audio quality requirement.

3. The method of claim 1, wherein the target encoding mode is preset.

4. The method of claim 1, wherein determining the target encoding mode and the target encoding rate comprises:
obtaining a control parameter, wherein the control parameter comprises the target encoding mode and the target encoding rate.

5. The method of any of claims 1-4, wherein the bitstream signal comprises indication information, and the indication information indicates at least one of:
the target encoding mode; or
a target decoding mode corresponding to the target encoding mode, wherein a decoding process of the target decoding mode is an inverse process of an encoding process of the target encoding mode.

6. The method of any of claims 1-5, further comprising:
sending the bitstream signal to a decoding device.

7. The method of any of claims 1-6, wherein the audio signal comprises at least one of:
a channel based audio signal;
an object based audio signal; or
a scene based audio signal.

8. An audio signal processing method, performed by an encoding device, comprising:
receiving a bitstream signal sent by an encoding device, wherein the bitstream signal is a signal obtained by encoding an audio signal by the encoding device based on a target encoding rate and a target encoding mode, the target encoding mode being selected from a plurality of encoding modes, wherein a difference between different encoding modes comprises at least one of different encoding computational complexity, or different storage space required for encoding; and
decoding the bitstream signal.

9. The method of claim 8, wherein the bitstream signal comprises indication information, and the indication information indicates at least one of:
the target encoding mode; or
a target decoding mode corresponding to the target encoding mode, wherein a decoding process of the target decoding mode is an inverse process of an encoding process of the target encoding mode.

10. The method of claim 9, wherein decoding the bitstream signal comprises:
determining the indication information based on the bitstream signal;
determining the target decoding mode corresponding to the target encoding mode based on the indication information; and
decoding the bitstream signal based on the target decoding mode.

11. A communication device, comprising:
a processing module, configured to determine a target encoding rate corresponding to an audio signal;
the processing module is further configured to determine a target encoding mode corresponding to the audio signal, wherein the target encoding mode is selected from a plurality of encoding modes, and a difference between different encoding modes comprises at least one of different encoding computation complexity, or different storage space required for encoding; and
the processing module is further configured to encode the audio signal based on the target encoding rate and the target encoding mode, to obtain a bitstream signal.

12. A communication device, comprising:
a transceiver module, configured to receive a bitstream signal sent by an encoding device, wherein the bitstream signal is a signal obtained by encoding an audio signal by the encoding device based on a target encoding rate and a target encoding mode, the target encoding mode being selected from a plurality of encoding modes, wherein a difference between different encoding modes comprises at least one of different encoding computational complexity, or different storage space required for encoding; and
a processing module, configured to decode the bitstream signal.

13. A communication device, comprising a processor and a memory for storing computer programs, wherein the processor is configured to execute the computer programs stored in the memory, to cause the device to implement the method of any one of claims 1-7, or the method of any one of claims 8-10.

14. A communication device, comprising a processor and an interface circuit; wherein
the interface circuit is configured to receive code instructions and transmit the code instructions to the processor; and
the processor is configured to run the code instructions to implement the method of any one of claims 1-7, or the method of any one of claims 8-10.

15. A computer-readable storage medium for storing instructions, wherein when the instructions are executed, the method of any one of claims 1-7, or the method of any one of claims 8-10 is implemented.
